(19) Europäisches Patentamt
European Patent Office
Office européen des brevets

(11) **EP 2 775 850 B1**

(12) **EUROPEAN PATENT SPECIFICATION**

(45) Date of publication and mention
of the grant of the patent:
**08.01.2020 Bulletin 2020/02**

(51) Int Cl.:
*A23L 33/00* *(2016.01)*  *A23L 33/19* *(2016.01)*
*A23C 9/142* *(2006.01)*

(21) Application number: **12794738.0**

(22) Date of filing: **09.11.2012**

(86) International application number:
**PCT/FI2012/051097**

(87) International publication number:
**WO 2013/068653 (16.05.2013 Gazette 2013/20)**

(54) **METHOD FOR PRODUCING AN INFANT FORMULA BASE**

VERFAHREN ZUR HERSTELLUNG EINER SÄUGLINGSNAHRUNGSBASIS

PROCÉDÉ POUR PRODUIRE UNE BASE DE FORMULE INFANTILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.11.2011 FI 20116120**

(43) Date of publication of application:
**17.09.2014 Bulletin 2014/38**

(73) Proprietor: **Valio Ltd**
**00370 Helsinki (FI)**

(72) Inventors:
• **TIKANMÄKI, Reetta**
**00370 Helsinki (FI)**

• **HARJU, Matti Erkki**
**00370 Helsinki (FI)**
• **TOSSAVAINEN, Olli**
**00370 Helsinki (FI)**

(74) Representative: **Kolster Oy Ab**
**(Salmisaarenaukio 1)**
**P.O. Box 204**
**00181 Helsinki (FI)**

(56) References cited:
**WO-A1-2007/055932      WO-A1-2008/127104
WO-A1-2011/051557      WO-A2-2007/084754
FR-A1- 2 809 595          US-A- 5 169 666
US-A1- 2003 124 237      US-A1- 2006 286 252
US-A1- 2007 166 447**

## Description

### Field of the invention

The invention relates to a method for producing a milk product. Particularly, the invention relates to a method for producing an infant formula base by means of membrane filtration techniques. The infant formula base of the invention is suitable for use in the production of an infant formula.

### Background of the invention

A need for an infant formula has always existed in situations where for some reason breastfeeding is impossible or human milk is insufficient. Bovine milk contains the same components (fat, casein, whey proteins, lactose, minerals) as human milk, but the components differ in concentrations. The amino acid compositions of $\beta$-casein and $\alpha$-lactalbumin in bovine milk are highly similar to the amino acid compositions of $\beta$-casein and $\alpha$-lactalbumin in human milk. However, the whey protein/casein ratio is different in bovine milk and in human milk; in bovine milk the ratio is 20:80 while in human milk it is 60:40. In order to adjust the amino acid composition of the protein of an infant formula to be as close as possible to the amino acid composition of human milk, the whey protein/casein ratio in the infant formula is typically adjusted to be the same as that in human milk.

Infant formulas are nowadays typically composed of powdered raw materials that are dissolved and mixed and dried again into an infant formula powder or sterilized and packaged as a liquid infant formula ready for instant use.

Infant formulas are typically produced from cheese whey as a source of lactose and protein. The three most important proteins in cheese whey are $\beta$-lactoglobulin, $\alpha$-lactalbumin, and caseinomacropeptide (CMP) released from casein by a rennet. $\beta$-lactoglobulin and $\alpha$-lactalbumin are useful proteins in an infant formula, but caseinomacropeptide deteriorates the amino acid composition of the proteins contained in whey and thus the suitability of whey proteins as raw material for an infant formula.

It is known that milk casein and whey protein can be separated from one another by microfiltration. When milk is filtered using 0.1 to 0.5 $\mu$m membranes, whey proteins penetrate through a membrane into a permeate whereas casein is retained in a retentate. The protein composition of an ideal whey produced by microfiltration differs from the composition of the conventional cheese whey e.g. such that the ideal whey contains no metabolism products of starters, such as lactic acid, that are released to the whey in cheese-making. Similarly, the release of caseinomacropeptides released by rennet enzymes from kappa casein to the whey is avoided. The most important types of protein in human milk are $\alpha$-lactalbumin and $\beta$-casein. When the release of caseino-macropeptides to the whey is avoided, $\alpha$-lactalbumin contained in the whey proteins forms a larger portion of the total protein. Thus, by using microfiltration it is possible to achieve a protein composition which is closer to that of human milk, compared to the use of cheese whey.

It has been disclosed that by means of microfiltration it is possible to produce an infant formula in which the amino acid composition is particularly suitable. WO 00/30461 describes a method for preparing an infant formula, wherein a permeate from microfiltration is concentrated and demineralized by electrodialysis and mixed with a microfiltration retentate or casein. A drawback of the method described in the WO document is that it is a complex process which requires intermediate dryings and pH-adjustment as well as an expensive and highly energy-consuming procedure of demineralization by electrodialysis.

US 5169666 discloses modification of bovine milk to simulate human milk protein composition which can be used in infant formulas. This is accomplished by low temperature ultrafiltration or microfiltration of bovine milk.

FR 2809595 A1 discloses a composition suitable for an infant formula. The composition is produced from skim milk using microfiltration, ultrafiltration and nanofiltration. The nanofiltration retentate and the ultrafiltration retentate are recombined to provide a final product.

WO 2011/051557 A1 discloses a method for preparing a whey protein product which is suitable for exercise enthusiasts using microfiltration and ultrafiltration. The obtained ultrafiltration retentate is combined with the microfiltration retentate to provide a ratio of whey protein to casein of about 90:10 to about 50:50.

### Brief description of the invention

We have surprisingly found that microfiltration together with other membrane filtration techniques enables an infant formula base with an excellent amino acid composition to be produced from fresh milk with no expensive demineralisation methods, intermediate dryings nor storage. A combination of microfiltration, ultrafiltration and nanofiltration enables milk to be split into a casein fraction, a whey protein fraction and a lactose fraction. These fractions can be combined in a desired manner and in appropriate proportions to provide an infant formula base in which the amino acid composition is close to that of human milk. When the infant formula base is supplemented with a suitable fat source and other necessary components, such as trace elements and vitamins, an infant formula which meets the requirements set by the EU food legislation is achieved.

The method according to the invention also enables an infant formula to be produced in which the total protein concentration is lower than the total protein concentration in the conventional infant formulas. It has become apparent that it would be desirable to decrease the protein concentration in the current infant formulas without, however, deteriorating their amino acid composition, because the protein concentration in these infant formulas is clearly higher than that in human milk. This may result in a child's undesired rapid growth. Excess protein also overstrains the child's metabolism unnecessarily.

An advantage of the method according to the invention is that no separate demineralisation by electrodialysis or ion exchange is necessary but milk is efficiently demineralised by membrane filtration. Neither does the method according to the invention comprise any intermediate drying phases of the prior art production methods that may cause harmful changes in the nutritive value of proteins, such as destruction of useful lycine, but the nutritional quality of the infant formula base produced in accordance with the invention is excellent. The method according to the invention does not employ any rennet, either, which enables the formation of undesired caseinomacropeptides to be avoided. The method according to the invention thus enables simple, cost-effective and efficient production of an infant formula base which is highly similar to human milk and in which the concentrations of different components can be easily adjusted as desired and in which the concentrations of the proteins $\alpha$-lactalbumin and $\beta$-casein in particular can be optimized in an advantageous manner. The method according to the invention enables amino acid concentrations required by legislation to be achieved more easily than before. In addition, the method according to the invention makes it possible to provide an infant formula base with a mineral composition that as such is closer to the mineral composition of a final infant formula.

One advantage of the method according to the invention is that the method particularly conveniently enables the production of an organic infant formula base since it is possible to directly use organic milk as raw material.

It is disclosed an infant formula base having a total protein concentration of about 1.0 to about 1.5% and a $\beta$-casein concentration of at least about 11% of the total protein. It is also disclosed an infant formula base having a total protein concentration of about 1.0 to about 1.5% and a $\beta$-casein concentration of at least about 50% of the casein.

### Brief description of the figures

Figure 1 illustrates an embodiment of the method according to the invention for the production of an infant formula base.

Figure 2 shows concentrations of necessary amino acids in an infant formula base according to the invention as well as minimum amounts required by legislation.

### Detailed description of the invention

An aspect of the invention provides a method for producing a liquid infant formula base as defined in claim 1.

In the context of the present invention, the milk raw material refers to milk as such or as a concentrate or as pre-treated as desired, such as heat-treated. The milk raw material may be supplemented with ingredients generally used in the production of milk products, such as fat, protein, mineral and/or sugar fractions or the like. The milk raw material may thus be, for instance, whole milk, low-fat or skim milk, cream, ultrafiltered milk, diafiltered milk, microfiltered milk, milk recombined from milk powder, organic milk or a combination or dilution of any of these. In an embodiment of the invention, the milk raw material is skim milk. In another embodiment, the milk raw material is whole milk.

The milk raw material may originate from a cow, sheep, goat, camel, horse, donkey or any other animal producing milk suitable for human nourishment.

In accordance with step b) of the method according to the invention, the milk raw material is subjected to microfiltration (MF) such that casein is retained in the MF retentate while whey proteins penetrate through the membrane into the MF permeate. Typically, microfiltration employs a polymeric or ceramic membrane having a porosity of about 0.1 to about 0.5 $\mu$m.

Microfiltration is typically performed with a concentration factor K = about 2 to about 10. The concentration factor K refers to the volumetric ratio of the liquid fed to the filtration to the retentate, and it is defined by the following formula:

$$K = \text{feed (L) / retentate (L).}$$

In an embodiment of the invention, diafiltration is used in connection with microfiltration to enhance separation of casein and whey proteins. Typically, tap water is used as diawater in diafiltration. Fractions obtained in different membrane filtrations of milk components may also be used as diawater. In diafiltration, the concentration factor may be considerably higher than that typically used in microfiltration.

The whey proteins in bovine milk mainly consist of β-lactoglobulin and α-lactalbumin. It is known that when bovine milk is heated, β-lactoglobulin begins to attach to casein. When milk is heavily heat-treated prior to microfiltration, a significant portion of β-lactoglobulin thus becomes attached to casein and does not penetrate the microfiltration membrane. Consequently, the α-lactalbumin concentration with respect to the total protein in the microfiltration permeate may be raised. Thus, when desired, the protein and amino acid composition of the microfiltration permeate used for composing the infant formula base may be adjusted advantageously by means of a heat treatment of the milk raw material. Denaturation of β-lactoglobulin and α-lactalbumin caused by a heat treatment is described in more detail in Example 2.

In the method of the invention, the milk raw material is heat-treated prior to microfiltration. The heat treatment is performed at about 65 to about 95°C for about 15 s to about 10 min. In a preferred embodiment of the invention, the heat treatment is performed at about 72 to about 90°C for about 15 s.

The casein in human milk is mainly β-casein. It is known that the permeation of β-casein through a microfiltration membrane may be influenced by adjusting the filtration temperature; WO 2007/055932 discloses that if microfiltration is performed at a temperature below 10°C, β-casein partly penetrates through the microfiltration membrane. In addition to whey proteins, the microfiltration permeate may thus be enriched with β-casein. The use of such a microfiltration permeate for producing an infant formula base enables a protein composition to be achieved that is even closer to the protein composition of human milk.

Changing the temperature at which microfiltration is performed enables the permeation ability of β-casein through the microfiltration membrane to be adjusted and thus the protein composition formed in the microfiltration permeate to be influenced. Microfiltration can be carried out at room temperature or at a temperature lower or higher than that. Typically, the temperature range is about 5 to about 55°C. When microfiltration is performed at a temperature lower than room temperature, e.g. at about 5 to about 15°C, the membrane permeation ability of β-casein, i.e. its amount in the MF permeate, increases. When microfiltration is performed at a temperature higher than room temperature, e.g. at about 45 to about 55°C, β-casein primarily does not penetrate the microfiltration membrane but is retained in the MF retentate. In the invention, microfiltration is performed at about 5 to about 15°C.

According to the present invention, by using microfiltration the protein composition of milk can be changed into a form which is beneficially close to the protein and amino acid composition of human milk and thus optimally suitable for producing an infant formula base. In an embodiment of the invention, the β-casein concentration in the infant formula base is at least about 11% of the total protein. In an embodiment of the invention, the β-casein concentration in the infant formula base is at least about 50% of the casein. This enables the amino acid concentrations required by legislation to be achieved more easily than before. Furthermore, it is possible to produce an infant formula base, and a final infant formula, having a lower protein concentration.

The microfiltration retentate containing casein in a concentrated form may be used for producing an infant formula base. It is also highly suitable for use as raw material in cheese-making.

Whey proteins collected in the microfiltration permeate are concentrated in accordance with step c) of the method according to the invention by subjecting the MF permeate to ultrafiltration (UF) to concentrate the whey proteins β-lactoglobulin and α-lactalbumin as well as β-casein possibly contained in the MF permeate into the UF retentate. The obtained UF retentate is used for producing an infant formula base. Lactose and milk minerals as well as other small molecule compounds penetrate the ultrafiltration membrane. In ultrafiltration, membranes with a cut-off value of about 1 to about 20 kDa are typically used. Ultrafiltration of the microfiltration permeate is typically performed with a concentration factor of about 10 to about 80.

In an embodiment of the invention, diafiltration is used in connection with ultrafiltration to enhance separation of the aforementioned components. Typically, tap water is used as diawater in diafiltration. Fractions obtained in different membrane filtrations of milk components may also be used as diawater.

Lactose contained in the UF permeate is separated in accordance with step d) of the method according to the invention by subjecting the UF permeate to nanofiltration. The lactose concentrates into the NF retentate while milk minerals and other small molecule compounds penetrate the nanofiltration membrane. The obtained NF retentate is used for producing an infant formula base. As in microfiltration and ultrafiltration, diafiltration may also be used in nanofiltration to enhance separation of lactose. Typically, tap water is used as diawater. Fractions obtained in different membrane filtrations of milk components may also be used as diawater.

The method according to the invention employs neither electrodialysis nor ion exchange for demineralisation.

In an embodiment of the invention, the method comprises a step of hydrolysing proteins to enable a hypoallergenic infant formula base to be produced. The hypoallergenic infant formula base can be used in the production of a hypoallergenic infant formula which is suitable for infants who are allergic to the proteins in bovine milk. In the hydrolysis of proteins, the proteins are hydrolysed enzymatically into small peptides that no longer cause allergic reactions. Hydrolysis may be carried out according to the known methods, by using protease enzymes widely known in the field. The hydrolysis of proteins may be performed in any suitable step during the method. In an embodiment of the invention, the hydrolysis of proteins is performed on the MF permeate prior to ultrafiltration. In another embodiment of the invention, the hydrolysis of proteins is performed on the MF permeate during ultrafiltration. In a still further embodiment of the invention, the hydrolysis of proteins is performed on the infant formula base composed in step e).

In an embodiment of the invention, the method comprises hydrolysing lactose to split the lactose into monosaccharides. Hydrolysis may be carried out using lactase enzymes widely used in the field and according to conventional methods in the field. The hydrolysis of lactose may be performed in any suitable step during the method. In an embodiment of the invention, the hydrolysis of lactose is performed on the MF permeate prior to ultrafiltration. In another embodiment of the invention, the hydrolysis of lactose is performed on the MF permeate during ultrafiltration. In a still further embodiment of the invention, the hydrolysis of lactose is performed on the infant formula base composed in step e).

Proteins and lactose may be hydrolysed simultaneously or in different steps.

In an embodiment of the invention, the method comprises a fermenting step or an acidifying step to produce an acidified infant formula base. The fermentation and acidification of the infant formula base may be carried out in a manner known per se. In an embodiment of the invention, the fermentation or acidification is performed on the infant formula base composed in step e).

In accordance with step e), an infant formula base is composed from the UF retentate, i.e. the whey protein concentrate, and the NF retentate, i.e. the lactose concentrate, obtained from step b) and c), respectively, and a milk based fat containing liquid.

The milk based fat containing liquid may be, e.g., the casein concentrate obtained from microfiltration of the milk raw material in step b) of the method of the invention, the milk raw material, milk with a standardized fat content, cream or a mixture thereof. In an embodiment, the milk based fat containing liquid is the casein concentrate.

In order to achieve a suitable infant formula, the infant formula base of the invention is supplemented with an extra fat fraction to provide a suitable fat composition to the formula. The extra fat fraction may be e.g. vegetable oil or another oil or any combination thereof. Typically, some mineral and trace elements still need to be added in order to provide an infant formula with an optimum composition. Typically, the mineral and trace elements to be supplemented are Fe, Zn, Cu, I, Se, and Ca.

The infant formula base produced in accordance with the invention may be heat-treated in a manner generally known in the field. The heat treatment may be pasteurization, high pasteurization, or heating at a temperature lower than the pasteurization temperature for a sufficiently long time. Particularly, UHT treatment (e.g. 138°C, 2 to 4 s), ESL treatment (e.g. 130°C, 1 to 2 s), pasteurization (e.g. 72°C, 15 s) or high pasteurization (95°C, 5 min) can be mentioned. The heat treatment may be either direct (vapour to milk, milk to vapour) or indirect (tube heat exchanger, plate heat exchanger, scraped-surface heat exchanger).

In an embodiment of the invention, the infant formula base is dried into a powder. An aspect of the invention provides a method for preparing a dried infant formula base as defined in claim 13. The drying may be carried out by any method generally used in the field, such as spray drying. The infant formula base can be recombined into water to provide an infant formula base in liquid form.

The total protein concentration of the infant formula base produced in accordance with the invention is about 1.0 to about 1.5%. The carbohydrate concentration is typically about 6.0 to about 8.0%. The fat concentration is typically about 3.0 to about 5.0%.

The infant formula base produced in accordance with the invention can be formulated to an infant formula having an energy content of about 60 to about 70 kcal/100 g. An aspect of the invention provides a method for producing an infant formula as defined in claim 14.

The ratio of whey protein to casein in the infant formula base may be adjusted to be about 50:50 to about 100:0. In an embodiment of the invention, the ratio is about 60:40 to about 80:20.

In an embodiment of the invention, the infant formula base is produced from the UF retentate and the NF retentate obtained in the method of the invention, milk, cream, vegetable fat and water.

In another embodiment, the infant formula base is produced from the MF retentate, the UF retentate and the NF retentate, obtained in the method of the invention, cream, vegetable fat and water.

In an embodiment, the β-casein concentration of the infant formula base produced in accordance with the invention is at least about 11% of the total protein.

In another embodiment, the β-casein concentration of the infant formula base produced in accordance with the invention is at least about 50% of the casein.

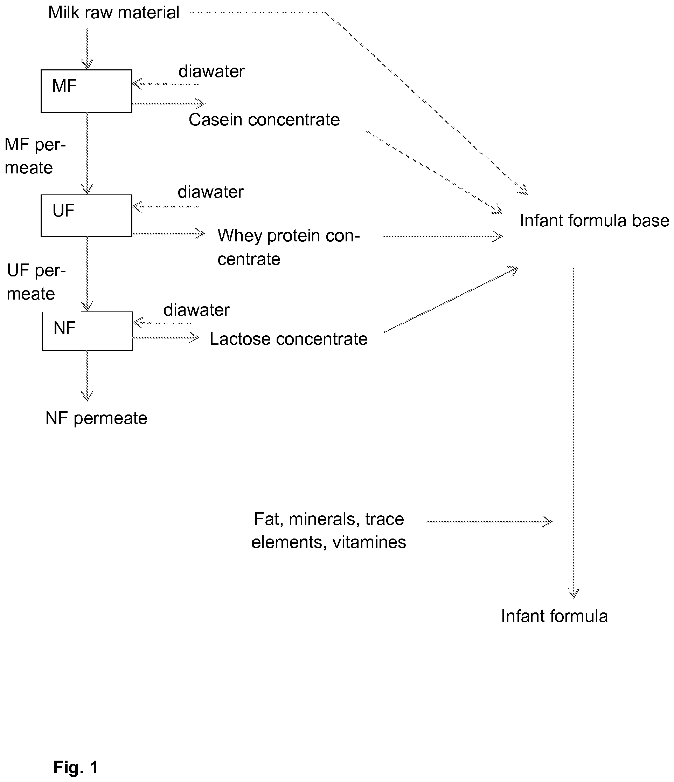

Figure 1 describes an embodiment of the method of the invention for producing an infant formula base. A milk raw material is subjected to microfiltration (MF), the obtained microfiltration permeate is subjected to ultrafiltration (UF), and the obtained UF permeate is subjected to nanofiltration (NF). Optional procedures are shown in broken line in the figure. If desired, it is thus possible to use diafiltration in connection with the microfiltration, ultrafiltration and nanofiltration. An infant formula base is composed from the whey protein concentrate obtained in ultrafiltration and the lactose concentrate obtained in nanofiltration. The casein concentrate obtained from microfiltration and the milk raw material can be used in the production of the infant formula base. The infant formula base is combined with extra fat, minerals, trace elements and vitamin supplements to provide an infant formula with an optimum composition.

It is disclosed an infant formula base having a total protein concentration of about 1.0 to about 1.5% and a β-casein concentration of at least about 11% of the total protein.

It is also disclosed an infant formula base having a total protein concentration of about 1.0 to about 1.5% and a β-casein concentration of at least about 50% of the casein.

In an embodiment, the infant formula base of the invention is liquid.

The infant formula base produced in accordance with the invention may be supplemented with probiotics such as *Lactobacillus LGG,* prebiotics such as galacto-oligosaccharides, amino acids such as taurine, proteins such as lactoferrin, and nucleotides.

It is disclosed an infant formula comprising the infant formula base of the invention. In an embodiment, the infant formula further comprises mineral and trace elements and an extra fat fraction. In an embodiment, the energy content of the infant formula is about 60 to about 70 kcal/100 g.

The infant formula can be liquid or powder. In an embodiment of the invention, an infant formula is produced which completely meets the requirements set by the EU food legislation.

The infant formula base or the infant formula may be used for producing other infant foods, such as porridges and gruels. One aspect of the invention thus provides a use of an infant formula base of the invention or produced by the method of the invention or of the infant formula of the invention for producing other milk-containing baby foods (baby formula, liquid baby formula, growing-up milk, etc.).

The following examples are given to further illustrate the invention without, however, restricting the invention thereto.

## Example 1

Skim milk (1 000 L) was microfiltered by polymeric filtration membranes (Synder FR) having a pore size of 800 kDa. The filtration temperature was 12°C. The milk was concentrated to a concentration factor of 3.3, followed by diafiltration. In the diafiltration step, a 1.5-fold amount of water was added to the microfiltration retentate. Water was added at the same rate as the permeate was collected. This gave 300 L of microfiltration retentate and 2 200 L of microfiltration permeate.

The microfiltration permeate was concentrated by ultrafiltration with 10 kDa membranes (Koch HFK-131) to a dry matter content of 12%. This gave 50 L of ultrafiltration retentate and 2 150 L of ultrafiltration permeate. The ultrafiltration permeate was further concentrated by nanofiltration to a dry matter content of 20%, followed by diafiltration. In the diafiltration step, a 1.5-fold amount of water was added to the nanofiltration retentate. Water was added at the same rate as the permeate was collected. This gave 540 L of nanofiltration retentate and 4 840 L of nanofiltration permeate.

End products of the filtration process were the microfiltration retentate, the ultrafiltration retentate, and the nanofiltration retentate. Table 1 describes the compositions of the obtained fractions.

**Table 1. Compositions of filtration fractions**

| Component | MF retentate | UF retentate | NF retentate |
|---|---|---|---|
| Protein (%) | 9.38 | 8.73 | 0.26 |
| Whey protein (%) | 0.33 | 6.52 | - |
| Casein (%) | 8.87 | 2.07 | - |
| Beta casein (%) | 3.00 | 1.36 | - |
| Lactose (%) | 0.41 | 1.88 | 16.73 |
| Ash (%) | 0.80 | 0.36 | 0.72 |
| Fat (%) | 0.10 | 0.05 | - |
| Dry matter (%) | 11.16 | 11.97 | 19.53 |

## Example 2

Skim milk (1 000 L) was heat-treated by different methods (65°C to 95°C, 15 s to 10 min) prior to a microfiltration step. The heat treatment of skim milk denatured β-lactoglobulin 1 to 90% and α-lactalbumin 0 to 26%.

Heat treatment at 72°C for 15 s denatured both β-lactoglobulin and α-lactalbumin less than 10%. Heat treatment at 80°C for 15 s denatured β-lactoglobulin 14% and α-lactalbumin again less than 10%. Heat treatment at 90°C for 15 s denatured β-lactoglobulin already 35%, and the denaturation of α-lactalbumin still remained unchanged. Only undenatured whey protein penetrates the microfiltration membrane, so a pre-heat-treatment may be used for influencing the protein composition of the microfiltration permeate.

## Example 3

An infant formula was composed from the UF retentate and NF retentate obtained in Example 1, as well as skim milk, cream and vegetable fat in accordance with Table 2. The whey protein/casein ratio used in the formula was 60/40. The energy content of the formula was 65 kcal/100 g. 17% of the protein in the formula was beta casein. 53% of the casein in the formula was beta casein.

**Table 2. Composition of infant formula**

| Component | Milk | UF retentate | Water | Cream | Vegetable fat | NF retentate | Product |
|---|---|---|---|---|---|---|---|
| Proportion (%) | 4.65 | 12.18 | 38.59 | 3.97 | 2.10 | 38.51 | 100 |
| Protein (%) | 3.40 | 8.73 | - | 2.00 | - | 0.26 | 1.40 |
| Whey protein (%) | 0.68 | 6.52 | - | 0.40 | - | - | 0.84 |
| Casein (%) | 2.72 | 2.07 | - | 1.60 | - | - | 0.44 |
| Beta casein (%) | 1.00 | 1.36 | - | 0.59 | - | - | 0.24 |
| Lactose (%) | 4.64 | 1.88 | - | 2.80 | - | 16.73 | 7.00 |
| Ash (%) | 0.77 | 0.36 | 0.08 | 0.50 | - | 0.72 | 0.41 |
| Fat (%) | 0.05 | 0.05 | - | 35.00 | 100 | - | 3.50 |

## Example 4

An infant formula was composed from the MF retentate, UF retentate, and NF retentate obtained in Example 1, as well as cream and vegetable fat in accordance with Table 3. The whey protein/casein ratio used in the formula was 60/40. The energy content of the formula was 65 kcal/100 g. 16% of the protein in the formula was beta casein. 53% of the casein in the formula was beta casein.

**Table 3. Composition of infant formula**

| Component | MF retentate | UF retentate | Water | Cream | Vegetable fat | NF retentate | Product |
|---|---|---|---|---|---|---|---|
| Proportion (%) | 1.27 | 12.57 | 40.37 | 3.97 | 2.10 | 39.72 | 100 |
| Protein (%) | 9.38 | 8.73 | - | 2.00 | - | 0.26 | 1.40 |
| Whey protein (%) | 0.33 | 6.52 | - | 0.40 | - | - | 0.84 |
| Casein (%) | 8.87 | 2.07 | - | 1.60 | - | - | 0.44 |
| Beta casein (%) | 3.00 | 1.36 | - | 0.54 | - | - | 0.23 |
| Lactose (%) | 0.41 | 1.88 | - | 2.80 | - | 16.73 | 7.00 |
| Ash (%) | 0.80 | 0.36 | 0.08 | 0.50 | - | 0.72 | 0.39 |
| Fat (%) | 0.10 | 0.05 | - | 35.00 | 100 | - | 3.50 |

## Example 5

Milk containing 3.5% fat (1 000 L) was microfiltered, ultrafiltered, and nanofiltered in a manner described in Example 1, except that the microfiltration was carried out at a temperature of 50°C.

An infant formula was composed from the MF retentate (filtrated at 50°C), and from the UF retentate and NF retentate obtained in Example 1, as well as milk and vegetable fat in accordance with Table 4. The whey protein/casein ratio used in the formula was 60/40. The energy content of the formula was 65 kcal/100 g. 17% of the protein in the formula was beta casein. 54% of the casein in the formula was beta casein.

**Table 4. Composition of infant formula**

| Component | MF retentate | UF retentate | Water | Milk | Vegetable fat | NF retentate | Product |
|---|---|---|---|---|---|---|---|
| Proportion (%) | 1.58 | 12.58 | 41.09 | 1.58 | 3.22 | 39.95 | 100 |
| Protein (%) | 9.38 | 8.73 | - | 3.20 | - | 0.26 | 1.40 |
| Whey protein (%) | 0.33 | 6.52 | - | 0.64 | - | - | 0.84 |
| Casein (%) | 8.98 | 2.07 | - | 2.56 | - | - | 0.44 |
| Beta casein (%) | 3.30 | 1.36 | - | 0.94 | - | - | 0.24 |
| Lactose (%) | 0.41 | 1.88 | - | 4.64 | - | 16.73 | 7.00 |
| Ash (%) | 0.80 | 0.36 | 0.08 | 0.77 | - | 0.72 | 0.39 |
| Fat (%) | 11.6 | 0.05 | - | 6.00 | 100 | - | 3.50 |

**Example 6**

Milk containing 3.5% fat (1 000 L) was microfiltered, ultrafiltered, and nanofiltered in a manner described in Example 1, except that the microfiltration was carried out at a temperature of 50°C.

An infant formula was composed from the MF retentate (filtrated at 50°C), and from the UF retentate and NF retentate obtained in Example 1, as well as vegetable fat in accordance with Table 5. The whey protein/casein ratio used in the formula was 60/40. The energy content of the formula was 65 kcal/100 g. 17% of the protein in the formula was beta casein. 54% of the casein in the formula was beta casein.

**Table 5. Composition of infant formula**

| Component | MF retentate | UF retentate | Water | Vegetable fat | NF retentate | Product |
|---|---|---|---|---|---|---|
| Proportion (%) | 1.99 | 12.71 | 41.66 | 3.26 | 40.38 | 100 |
| Protein (%) | 9.38 | 8.73 | - | - | 0.26 | 1.40 |
| Whey protein (%) | 0.33 | 6.52 | - | - | - | 0.84 |
| Casein (%) | 8.98 | 2.07 | - | - | - | 0.44 |
| Beta casein (%) | 3.30 | 1.36 | | - | | 0.24 |
| Lactose (%) | 0.41 | 1.88 | - | - | 16.73 | 7.00 |
| Ash (%) | 0.80 | 0.36 | 0.08 | - | 0.72 | 0.39 |
| Fat (%) | 11.6 | 0.05 | - | 100 | - | 3.50 |

**Example 7**

Skim milk (1 000 L) was microfiltered, ultrafiltered, and nanofiltered in a manner described in Example 1, except that the microfiltration was carried out at a temperature of 15°C.

An infant formula was composed from the UF retentate and the NF retentate separated by the filtrations, as well as cream and vegetable fat in accordance with Table 6. The whey protein/casein ratio used in the formula was 80/20. The energy content of the formula was 60 kcal/100 g. 11% of the protein in the formula was beta casein. 51% of the casein in the formula was beta casein.

**Table 6. Composition of infant formula**

| Component | UF retentate | Water | Cream | Vegetable fat | NF retentate | Product |
|---|---|---|---|---|---|---|
| Proportion (%) | 11.61 | 48.17 | 3.97 | 2.10 | 39.72 | 100 |
| Protein (%) | 8.79 | - | 2.00 | - | 0.26 | 1.19 |
| Whey protein (%) | 7.00 | - | 0.40 | - | - | 0.83 |

(continued)

| Component | UF retentate | Water | Cream | Vegetable fat | NF retentate | Product |
|---|---|---|---|---|---|---|
| Casein (%) | 1.65 | - | 1.60 | - | - | 0.26 |
| Beta casein (%) | 0.94 | - | 0.54 | - | - | 0.13 |
| Lactose (%) | 1.60 | - | 2.80 | - | 16.73 | 6.01 |
| Ash (%) | 0.36 | 0.08 | 0.50 | - | 0.72 | 0.35 |
| Fat (%) | 0.05 | - | 35.00 | 100 | - | 3.50 |

Despite the low protein concentration in the product, the infant formula according to Table 6 meets the requirements set by the EU legislation for necessary amino acids without any amino acid supplements.

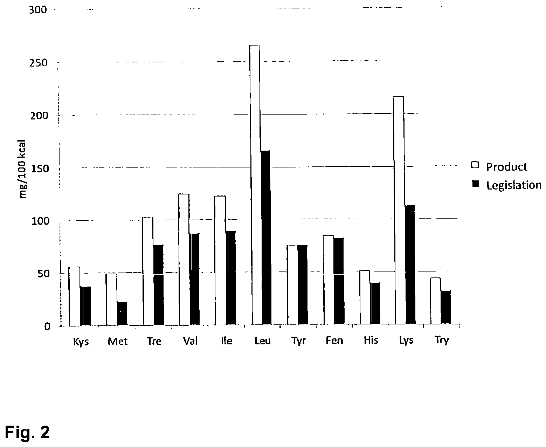

Figure 2 shows the amino acid composition of the infant formula according to Table 6. The values prescribed by legislation represent the required minimum concentration of each amino acid.

**Example** 8

Skim milk (1 000 L) was microfiltered, ultrafiltered, and nanofiltered in a manner described in Example 1, except that the microfiltration was carried out at a temperature of 15°C.

An infant formula was composed from the MF retentate, UF retentate and the NF retentate separated by the filtrations, as well as vegetable fat in accordance with Table 7. The whey protein/casein ratio used in the formula was 75/25. The energy content of the formula was 60 kcal/100 g. 11% of the protein in the formula was beta casein. 50% of the casein in the formula was beta casein.

**Table 7. Composition of infant formula**

| Component | MF retentate | UF retentate | Water | Vegetable fat | NF retentate | Product |
|---|---|---|---|---|---|---|
| Proportion (%) | 0.92 | 11.61 | 50.10 | 3.49 | 34.80 | 100 |
| Protein (%) | 9.38 | 8.79 | 0.00 | - | 0.26 | 1.20 |
| Whey protein (%) | 0.33 | 7.00 | 0.00 | - | 0.00 | 0.82 |
| Casein (%) | 8.87 | 1.65 | 0.00 | - | 0.00 | 0.27 |
| Beta casein (%) | 3.00 | 0.94 | | - | - | 0.14 |
| Lactose (%) | 0.41 | 1.60 | 0.00 | - | 16.73 | 6.01 |
| Ash (%) | 0.80 | 0.36 | 0.08 | - | 0.72 | 0.34 |
| Fat (%) | 0.05 | 0.05 | | 100 | 0.00 | 3.50 |

Despite the low protein concentration in the product, the infant formula according to Table 7 meets the requirements set by the EU legislation for necessary amino acids without any amino acid supplements.

It will be apparent to a person skilled in the art that as technology advances, the basic idea of the invention may be implemented in many different ways. The invention and its embodiments are thus not restricted to the examples described above but may vary within the scope of the claims.

**Claims**

1.  A method for producing a liquid infant formula base, the method comprising the following steps of:

a) heat treating a milk raw material at about 65 to about 95°C for about 15 s to about 10 min,

b) subjecting the heat-treated milk raw material to microfiltration at a temperature of about 5 to about 15°C to provide a casein concentrate as a microfiltration retentate and a microfiltration permeate containing whey proteins,

c) subjecting the microfiltration permeate to ultrafiltration to provide a whey protein concentrate as an ultrafiltration retentate and an ultrafiltration permeate containing lactose and milk salts,

d) subjecting the ultrafiltration permeate to nanofiltration to provide a lactose concentrate as a nanofiltration retentate and a nanofiltration permeate containing milk salts,

e) composing a liquid infant formula base from the whey protein concentrate, the lactose concentrate and a milk based fat containing liquid wherein the liquid infant formula base optionally has a total protein concentration of about 1.0 to about 1.5%.

2. The method of claim 1, wherein the milk raw material is skim milk.

3. The method of claim 1 or 2, wherein diafiltration is used in microfiltration, ultrafiltration and/or nanofiltration with water as diawater.

4. The method of any of the preceding claims, wherein no electrodialysis nor ion exchange is used for demineralisation.

5. The method of any one of the preceding claims, wherein the milk raw material is heat-treated prior to microfiltration at about 72 to about 90°C for about 15 s.

6. The method of any one of the preceding claims, wherein the infant formula base is produced in which the β-casein concentration is at least about 11% of the total protein concentration.

7. The method of any one of the preceding claims, wherein the infant formula base is produced in which the β-casein concentration is at least about 50% of the casein concentration.

8. The method of any of the preceding claims, wherein the whey protein/casein ratio of the infant formula base is adjusted to be about 50:50 to about 100:0, preferably about 60:40 to about 80:20.

9. The method of any one of the preceding claims, comprising a step of hydrolysing proteins.

10. The method of claim 9, wherein the hydrolysis of proteins is performed on the MF permeate.

11. The method of any one of the preceding claims, comprising a step of hydrolysing lactose.

12. The method of claim 11, wherein the hydrolysis of lactose is performed on the infant formula base composed in step d).

13. A method for preparing a dried infant formula base, wherein the steps of the method of any one of claims 1-12 are followed by drying the liquid infant formula base into a powder.

14. A method for preparing an infant formula, wherein the steps of the method of any one of claims 1-13 are followed by formulating the infant formula base to an infant formula.

15. The method of claim 14, wherein the infant formula base is formulated to a liquid infant formula having an energy content of about 60 to about 70 kcal/100 g.

**Patentansprüche**

1. Verfahren zur Herstellung einer flüssigen Säuglingsnahrungsbasis, wobei das Verfahren die folgenden Schritte umfasst:

a) Wärmebehandeln eines Milchrohmaterials bei etwa 65 bis etwa 95°C während etwa 15 s bis etwa 10 min,

b) Unterziehen des wärmebehandelten Milchrohmaterials Mikrofiltration bei einer Temperatur von etwa 5 bis etwa 15°C, um ein Kaseinkonzentrat als ein Mikrofiltrationsretentat und ein Mikrofiltrationspermeat bereitzustellen, das Molkenproteine enthält,

c) Unterziehen des Mikrofiltrationspermeats Ultrafiltration, um ein Molkenproteinkonzentrat als ein Ultrafiltrationsretentat und ein Ultrafiltrationspermeat bereitzustellen, das Laktose und Milchmineralien enthält,

d) Unterziehen des Ultrafiltrationspermeats Nanofiltration, um ein Laktosekonzentrat als ein Nanofiltrationsretentat und ein Nanofiltrationspermeat bereitzustellen, das Milchmineralien enthält,

e) Zusammenstellen einer flüssigen Säuglingsnahrungsbasis von dem Molkenproteinkonzentrat, dem Laktosekonzentrat und einer Milchfett enthaltenen Flüssigkeit, wobei die flüssige Säuglingsnahrungsbasis wahlweise eine Gesamtproteinkonzentration von etwa 1,0 bis etwa 1,5% aufweist.

2. Verfahren nach Anspruch 1, wobei das Milchrohmaterial Magermilch ist.

3. Verfahren nach Anspruch 1 oder 2, wobei Diafiltration in Mikrofiltration, Ultrafiltration und/oder Nanofiltration mit Wasser als Diawasser verwendet wird.

4. Verfahren nach einem der vorhergehenden Ansprüche, wobei weder Elektrodialyse noch Ionenaustausch zur Demineralisierung verwendet wird.

5. Verfahren nach einem der vorhergehenden Ansprüche, wobei das Milchrohmaterial vor der Mikrofiltration für etwa 15 s bei etwa 72 bis etwa 90°C wärmebehandelt wird.

6. Verfahren nach einem der vorhergehenden Ansprüche, wobei die Säuglingsnahrungsbasis hergestellt wird, in dem die β-Kaseinkonzentration mindestens etwa 11% der Gesamtproteinkonzentration beträgt.

7. Verfahren nach einem der vorhergehenden Ansprüche, wobei die Säuglingsnahrungsbasis hergestellt wird, in dem die β-Kaseinkonzentration mindestens etwa 50% der Kaseinkonzentration beträgt.

8. Verfahren nach einem der vorhergehenden Ansprüche, wobei das Molkenprotein/Kasein-Verhältnis der Säuglingsnahrungsbasis angepasst wird, um etwa 50:50 bis etwa 100:0, vorzugsweise etwa 60:40 bis etwa 80:20, zu betragen.

9. Verfahren nach einem der vorhergehenden Ansprüche, das einen Schritt zum Hydrolysieren von Proteinen umfasst.

10. Verfahren nach Anspruch 9, wobei die Hydrolyse von Proteinen auf dem MF-Permeat durchgeführt wird.

11. Verfahren nach einem der vorhergehenden Ansprüche, das einen Schritt zum Hydrolysieren von Laktose umfasst.

12. Verfahren nach Anspruch 11, wobei die Hydrolyse von Laktose auf der in Schritt d) zusammengestellten Säuglingsnahrungsbasis durchgeführt wird.

13. Verfahren zum Zubereiten einer getrockneten Säuglingsnahrungsbasis, wobei auf die Schritte des Verfahrens nach einem der Ansprüche 1 bis 12 das Trocknen der flüssigen Säuglingsnahrungsbasis in ein Pulver folgt.

14. Verfahren zum Zubereiten einer Säuglingsnahrung, wobei auf die Schritte des Verfahrens nach einem der Ansprüche 1 bis 13 das Formulieren der Säuglingsnahrungsbasis in eine Säuglingsnahrung folgt.

15. Verfahren nach Anspruch 14, wobei die Säuglingsnahrungsbasis in eine flüssige Säuglingsnahrung formuliert wird, die einen Energiewert von etwa 60 bis etwa 70 kcal/100 g aufweist.

## Revendications

1. Procédé pour produire une base de formule infantile liquide, le procédé comprenant les étapes suivantes :

a) traitement thermique d'une matière première de lait à une température d'environ 65 à environ 95 °C pendant environ 15 secondes à environ 10 minutes,
b) soumission de la matière première de lait traitée thermiquement à une microfiltration à une température d'environ 5 à environ 15 °C pour donner un concentré de caséine sous la forme d'un rétentat de microfiltration et un perméat de microfiltration contenant des protéines de lactosérum,
c) soumission du perméat de microfiltration à une ultrafiltration pour donner un concentré de protéines de lactosérum sous la forme d'un rétentat d'ultrafiltration et un perméat d'ultrafiltration contenant du lactose et des minérales de lait,
d) soumission du perméat d'ultrafiltration à une nanofiltration pour donner un concentré de lactose sous la forme d'un rétentat de nanofiltration et un perméat de nanofiltration contenant des sels de lait,
e) composition d'une base de formule infantile liquide à partir du concentré de protéines de lactosérum, du concentré de lactose et d'un liquide contenant de matière grasse du lait, dans lequel la base de formule infantile liquide a éventuellement une concentration de protéines totale d'environ 1,0 à environ 1,5 %.

**2.** Procédé selon la revendication 1, dans lequel la matière première de lait est du lait écrémé.

**3.** Procédé selon la revendication 1 ou 2, dans lequel une diafiltration est utilisée dans la microfiltration, l'ultrafiltration et/ou la nanofiltration avec de l'eau en tant qu'eau de diafiltration.

**4.** Procédé selon l'une quelconque des revendications précédentes, dans lequel aucun échange d'ions ou électrodialyse n'est utilisé pour la déminéralisation.

**5.** Procédé selon l'une quelconque des revendications précédentes, dans lequel la matière première de lait est traitée thermiquement avant la microfiltration à une température d'environ 72 à environ 90 °C pendant environ 15 secondes.

**6.** Procédé selon l'une quelconque des revendications précédentes, dans lequel est produite la base de formule infantile dans laquelle la concentration de β-caséine est d'au moins environ 11 % de la concentration de protéines totale.

**7.** Procédé selon l'une quelconque des revendications précédentes, dans lequel est produite la base de formule infantile dans laquelle la concentration de β-caséine est d'au moins environ 50 % de la concentration de caséine.

**8.** Procédé selon l'une quelconque des revendications précédentes, dans lequel le rapport protéines de lactosérum/caséine de la base de formule infantile est ajusté pour être d'environ 50/50 à environ 100/0, de préférence d'environ 60/40 à environ 80/20.

**9.** Procédé selon l'une quelconque des revendications précédentes, comprenant une étape d'hydrolyse de protéines.

**10.** Procédé selon la revendication 9, dans lequel l'hydrolyse de protéines est effectuée sur le perméat de MF.

**11.** Procédé selon l'une quelconque des revendications précédentes, comprenant une étape d'hydrolyse du lactose.

**12.** Procédé selon la revendication 11, dans lequel l'hydrolyse du lactose est effectuée sur la base de formule infantile composée dans l'étape d).

**13.** Procédé pour préparer une base de formule infantile sèche, dans lequel les étapes du procédé de l'une quelconque des revendications 1 à 12 sont suivies d'un séchage en une poudre de la base de formule infantile liquide.

**14.** Procédé pour préparer une formule infantile, dans lequel les étapes du procédé de l'une quelconque des revendications 1 à 13 sont suivies de la formulation en une formule infantile de la base de formule infantile.

**15.** Procédé selon la revendication 14, dans lequel la base de formule infantile est formulée en une formule infantile liquide ayant une teneur en énergie d'environ 60 à environ 70 kcal/100 g.

Milk raw material ┄┄┄┄┄┄┄┄┄

MF ┄┄ diawater
┄┄┄> Casein concentrate

MF per-
meate

UF ┄┄ diawater
┄┄┄> Whey protein con-
centrate

UF per-
meate

NF ┄┄ diawater
┄┄┄> Lactose concentrate

NF permeate

Infant formula base

Fat, minerals, trace ┄┄┄┄┄>
elements, vitamines

Infant formula

**Fig. 1**

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0030461 A
- US 5169666 A
- FR 2809595 A1
- WO 2011051557 A1
- WO 2007055932 A